(19) Europäisches Patentamt
European Patent Office
Office européen des brevets

(11) Publication number: 0 012 006 B1

(12) EUROPEAN PATENT SPECIFICATION

(45) Date of publication of patent specification: 14.09.83

(51) Int. Cl.[3]: F 01 K 21/00, F 01 K 25/04, C 02 F 1/16

(21) Application number: 79302698.0

(22) Date of filing: 27.11.79

# (54) Heat cycle system and method for producing fresh water from brine.

(30) Priority: 27.11.78 US 963786

(43) Date of publication of application: 11.06.80 Bulletin 80/12

(45) Publication of the grant of the patent: 14.09.83 Bulletin 83/37

(84) Designated Contracting States: AT BE CH DE FR GB IT LU NL SE

(56) References cited:
CH - A - 491 056
GB - A - 765 216
US - A - 3 879 949
US - A - 3 995 428
US - A - 4 063 417

(73) Proprietor: TRANSAMERICA DELAVAL, INC.
3450 Princeton Pike
Lawrenceville New Jersey 08648 (US)

(72) Inventor: Amend, William Edgar
26 Encanto Drive
Rolling Hills Estates California 90274 (US)
Inventor: Studhalter, Walter Richard
22263 Ninfa Court
Woodland Hills, California 91364 (US)

(74) Representative: Slight, Geoffrey Charles et al,
Graham Watt & Co. Riverhead
Sevenoaks Kent TN13 2BN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 012 006 B1

Heat cycle system and method for producing fresh water from brine

This invention relates to a heat cycle for producing fresh water from brine and concerns a waste heat recovery cycle therefor.

There is a constant requirement and need for efficient systems to recover waste heat and to produce fresh water from brine such as sea water. While many heat recovery cycles and fresh water producing systems have been proposed in the past, none are believed to embody the many unusual advantages in construction, mode of operation, and results as are now achievable through use of the present invention.

CH—A—491056 describes a system for producing fresh water from sea water i.e. brine, employing waste hot fluid, including first heat transfer means for receiving the hot fluid and the brine for transfer of heat from the hot fluid to the brine, separator means for receiving heated brine fed to the separator means for producing a rotating liquid layer and for separating steam therefrom, and further heat transfer means for receiving the brine and also steam separated in said separator means for transferring heat from the steam to the brine thereby to condense the steam, and means for collecting the fresh water condensate.

In this system, the inner surface of the rotating liquid layer is subjected to a subatmospheric pressure to separate steam within the separator means.

US—A—3 879 949 describes a two-phase turbine engine including a gas-liquid separator which may be used in the system of the present invention. The gas-liquid separator includes nozzles, a separator wheel rotatable within a casing and a radial flow turbine. A mixture of liquid and gas is supplied at high pressure to the nozzles and expands and is separated therein. The resulting high-velocity two-phase jets impinge on the inner surface of the rim of the separator wheel and rotate same, the liquid becoming concentrated in a rotating liquid layer on the inner surface of the rim while the gas separates and flows radially inwardly to a gas discharge pipe to be condensed and recirculated to the nozzles. Power is extracted from the rotating liquid layer in the radial-flow turbine.

The present invention is characterised in that said further heat transfer means is connected to receive the brine prior to the heating thereof in said first heat transfer means, in that said separator means is a rotary separator mans and in that the rotary separator means includes nozzle means connected to receive heated brine from said first heat transfer means for flow through the nozzle means for expansion of the brine to form a fluid jet or jets of steam and liquid droplets to constitute said rotating liquid layer.

The waste hot fluid may be the exhaust gas from diesel engines, gas turbines, boiler plants and the like. Waste heat is thereby recovered from the relatively low level of engine exhaust by transfer to the brine and transformed into the kinetic energy of the steam and liquid droplets in the jets issuing from the nozzle means. This kinetic energy is largely imparted to the liquid droplets, in a manner such that the energy is available to drive a liquid turbine.

Thus, the system may include turbine means communicating with said separator means to receive liquid from said rotating liquid layer to drive the turbine means.

The heat cycle of the present invention, as a whole, has significant advantages over Rankine cycles which evaporate a fluid to operate a gas turbine. These advantages include simplicity and reliability, low temperature operation of rotating parts, lower speeds, more efficient heat transfer, and potentially improved thermodynamic efficiency. In this regard, a simple system embodying the present invention typically costs between 50 and 60 percent of the comparable cost of a Rankine system.

While the basic system as referred to possesses all of the advantages mentioned above in a marine application, in addition it could also be used to concentrate brine in certain industrial applications while producing power from waste heat. The cycle power production efficiency is competitive with the more costly Rankine cycle, and a fraction of the brine or sea water used in the cycle is delivered as potable water while concomitantly concentrating the brine.

The present invention also provides a method for producing fresh water from aqueous brine employing waste hot fluid, including the steps of transferring heat from the hot fluid to the brine, producing a rotating liquid layer from the heated brine and separating steam therefrom, condensing said steam by passing the steam in heat transfer relationship with the brine and collecting the fresh water condensate characterised by condensing the steam by passing the steam in heat transfer relationship with the brine prior to heating the brine with said hot fluid by expanding the heated brine to form a fluid jet or jets of steam and liquid droplets and by causing the jet or jets to rotate a rotary separator thereby to form said rotating liquid layer.

The liquid from the rotating liquid layer or layers may be used to drive a turbine means for the production of power. The rejected liquid, i.e. brine from the turbine means may be re-used as will hereinafter be described. Several separator and turbine stages may also be employed to increase efficiency, in a manner as will hereinafter be described.

Some ways of carrying the present invention into effect are described below with reference to drawings which illustrate specific embodiments, by way of example.

In the drawings:—

Fig. 1 is a system diagram;

Fig. 2 is a modified system diagram;

Fig. 3 is a graph of cycle efficiencies;

Fig. 4 is a side elevation of a nozzle, separator and turbine combination;

Fig. 5 is an enlarged sectional elevation taken on lines 5—5 of Fig. 8;

Fig. 6 is a fragmentary section on lines 6—6 of Fig. 5;

Fig. 7 is an enlarged section on lines 7—7 of Fig. 6; and

Fig. 8 is a top plan view, partly in section, of the Fig. 4 combination.

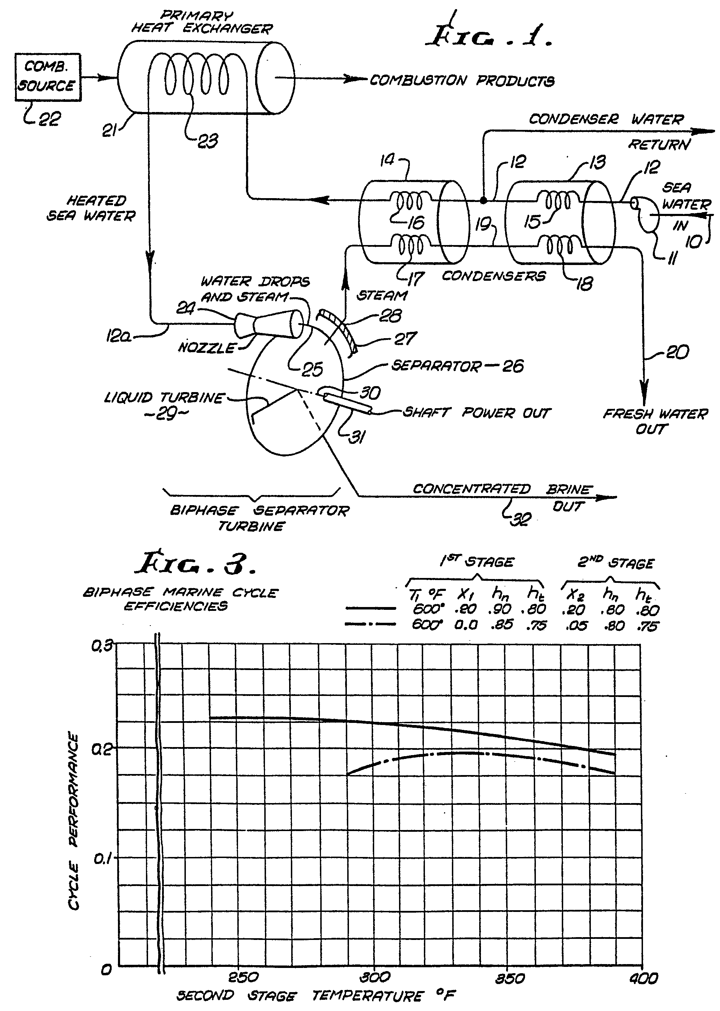

With reference to the drawings, a waste heat recovery cycle in accordance with the present invention for producing power and fresh water is shown in Fig. 1. Sea water, i.e. brine, is supplied at 10, and its pressure is elevated if need be by a pump 11. The relatively cool brine then flows at 12 through heat transfer means such as condensers 13 and 14 containing coils 15 and 16, wherein it is heated by heat transfer from coils 17 and 18. Steam passed at 19 through the latter coil is condensed to supply such heat, the resultant fresh water condensate is removed at 20 and collected for use.

The heated brine then enters a primary heat exchanger 21 wherein it picks up heat from waste hot fluid, in the present example the hot products of combustion produced by a source 22 such as internal combustion engine. The overall system has special utility in marine applications, where for example diesel engines are widely used. In this regard, the brine may flow through a coil 23 over which the hot products of combustion flow, as indicated.

The heated brine is then conducted at 12*a* to nozzle means (as for example nozzle 24) connected or located to receive the brine for flow through the nozzle means and expansion therein to form steam and liquid droplets in a jet 25 discharged from the nozzle. A suitable nozzle for this purpose is described in U.S. Patent No. 3,879,949. The expansion imparts kinetic energy mainly to the liquid droplets, and the two-phase mixture of the jet is caused to impinge on the rim of a rotary separator 26. The latter is located in the path of the jet to be rotated by the jet for producing a layer of liquid formed from the liquid droplets on the separator rim, as described in U.S. Patent No. 3,879,949. Steam separation from the jet and from the liquid layer also occurs, the steam being accumulated within a housing 27 containing the separator, and exiting from the housing at 28. That steam then flows to the condensers 14 and 13 as referred to above.

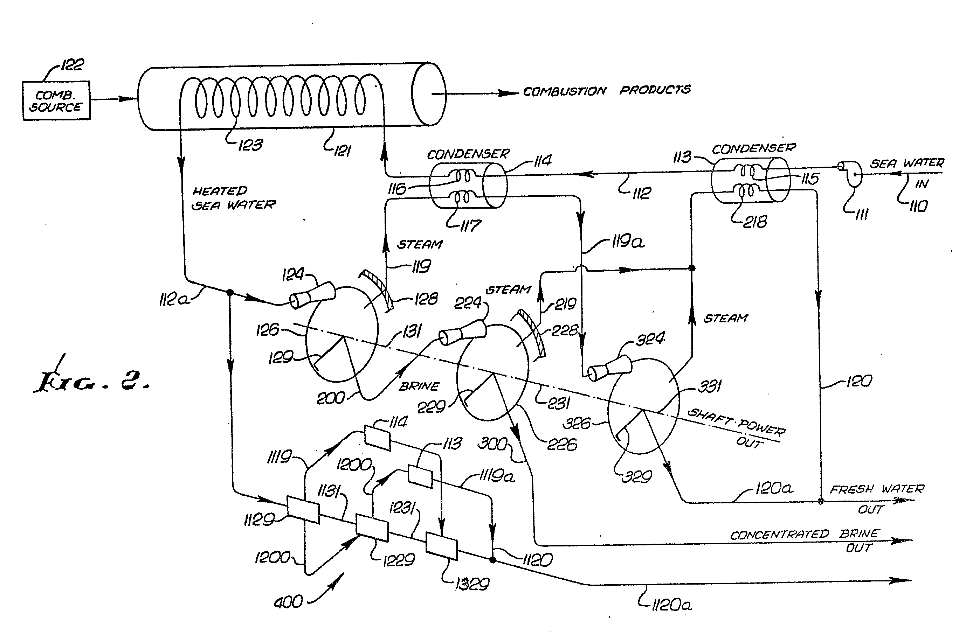

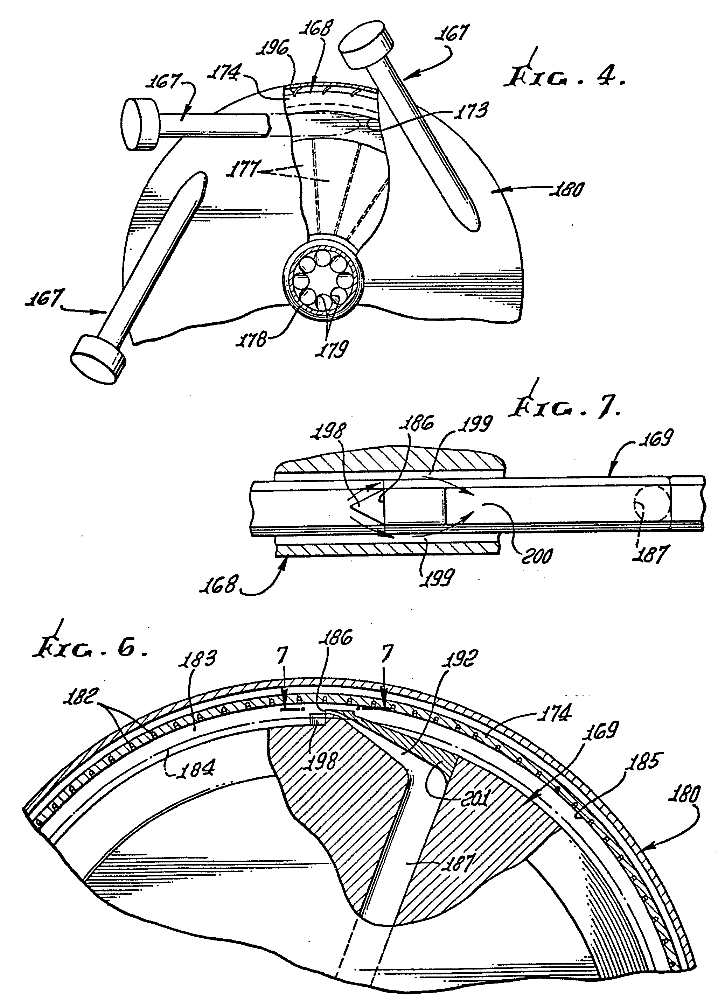

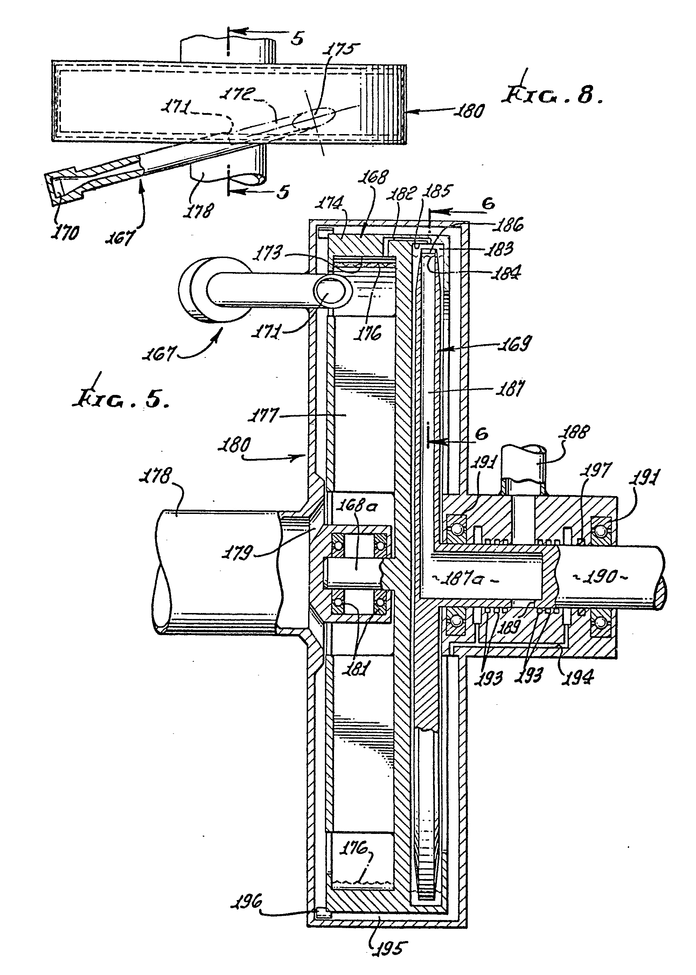

Also provided is liquid turbine means indicated schematically at 29, the common axis of the rotary separator 26, rotary turbine 29, and output shaft 30 appearing at 31. Liquid from the rotating ring or layer formed on the separator rim is removed to drive the turbine, in the manner described in U.S. Patent No. 3,879,949, and also below with reference to Figs. 4 to 8, power produced by the turbine being taken off at shaft 31. Spent liquid in the form of concentrated brine exits from the turbine at 32, and may be returned to the sea. The amount of fresh water obtainable from the separated steam is a substantial fraction of the volume of brine entering the cycle.

Figs. 4 to 8 illustrate typical nozzles 167, separator wheel 168 rotating within casing 180, and radial-flow turbine 169, shown as coaxially rotatable within the casing. The heated brine is supplied at high pressure to the nozzle inlets 170. The brine expands to low pressure at the nozzle exits 171, and the resulting high-velocity two-phase jets 172 of liquid droplets and steam impinge on the inner surface 173 of the rim 174 of the rotating separator at locations 175, seen in Fig. 8. The briny liquid droplets become concentrated in a layer 176 of liquid on the inner surface 173 due to the inertia of the liquid and to centrifugal force, while the steam separates and flows radially inward through passages 177 and enters the discharge pipe 178 through ports 179 in the stationary casing or housing 180. The rotating separator is supported by bearings 181 mounted in the housing 180 and receiving a separator wheel axle 168*a*.

The rotation of the separator 168 is impeded only by windage and bearing friction losses which can be very small. Thus, only a very small relative velocity between the impinging jets 172 and the surface 173, aided by the torque imparted to the rotating separator by the inward flow of the steam through passages 177, serves to maintain the speed of the liquid layer 176 at a value nearly equal to that of the jets 172.

The liquid flows from the liquid layer 176 through passages 182 in the rim of the rotating separator 168 and then into an annular chamber 183 which forms an integral part of the separator wheel 168. As a result another liquid layer 184 is formed, held against the surface 185 by centrifugal force. This layer furnishes a fluid energy source for a turbine rotor 169 rotating concentrically within the separator wheel and having turbine inlet passages 186 immersed in the liquid layer 184.

The turbine 169 may have blades or passages arranged to intercept the liquid layer 184, and Figs. 5 and 6 show a radial-flow type turbine. The turbine rotor 169 typically rotates at a lower angular velocity than the separator wheel 168, causing liquid from the layer 184 to enter the inlets 186, flow radially inward through passages 187, and flow to a liquid outlet pipe 188 *via* axial passage 187*a* and apertures 189 in the wall of the turbine shaft 190. The shaft 190 is connected to a load. The turbine 169 is supported on bearings 191.

Each turbine passage 187 can optionally incorporate a diffuser 192 in which the velocity of the liquid entering inlet 186 can be partially converted to pressure such that, even allowing for the pressure drop in the radial passage 187 due to centrifugal force, the liquid pressure in discharge pipe 188 is substantially higher than the pressure in the turbine casing 180, and, in fact, greater than the pressure at the nozzle inlets 170. Thus, the diffusers 192 can supply any need for pumping of the liquid.

For operation with high pressure at the discharge 188, the leakage of liquid between the shaft 190 and the housing 180 is reduced by labyrinth seals 193 and drains 194 which return liquid leakage to the bottom 195 of the housing 180, where the liquid from this and other internal leakage sources is picked up by slinger blades 196 and thrown back into the jets 172. Leakage to the outside of housing 180 is prevented by a shaft seal 197.

The external shape of the turbine inlet ports 186 must be such as to minimize external drag and turbulence that could disturb and retard the liquid layer 184. The design shown in Fig. 7 employs a wedge-shaped strut 198 for the portion of the turbine inlet which intercepts the surface of the liquid layer 184 so that the flow intercepted by the strut is split at 199 with minimum disturbance and returned with little velocity loss to the liquid layer in the wake region 200 behind the turbine inlet 186.

To allow for operation at different liquid flow rates, the diffusers 192 may be equipped with movable walls 201 which serve to vary the area of the turbine inlets 186.

A modified waste heat recovery cycle in accordance with the present invention is shown in Fig. 2. Sea water enters the modified system at 110, is pressurized by a pump 111 and passes to conduit 112 through a coil 115 in a condenser 113 and through a coil 116 in a condenser 114. The brine then passes through a coil 123 in a primary heat exchanger 121 corresponding to heat exchanger 21 in Fig. 1. An internal combustion engine 122 corresponds to engine 22 in Fig. 1.

The heated sea water is then passed at 112*a* for flow and expansion to form a jet of steam, and liquid droplets, through a first stage nozzle means 124. A first stage rotary separator means 126 is located in the path of that jet to be rotated by kinetic energy of the jet for producing a layer of liquid on the separator means (as described above), accompanied by steam separation. Steam passes at 119 from the separator housing 128 to coil 117 in condenser 114, where it is partly condensed and passed as pressurized steam and water droplets to a nozzle 324 associated with a third rotary separator means 326.

A first stage turbine 129 is associated with separator 126 and receives liquid brine from the rotating layer on separator 126 to drive that first turbine stage, an output shaft being indicated at 131. Brine at reduced pressure that has passed through turbine 129 is passed at 200 to a second stage nozzle means 224 for flow and expansion therein to form steam and liquid droplets in a second stage jet. The latter impinges on a second stage rotary separator means 226 (in the path of the jet) to rotate that separator and produce a layer of liquid brine on that separator and rotating therewith. Separated steam is passed at 219 from housing 228 to coil 218 of condenser 113, for condensation and removal at 120 as fresh water. A second stage turbine means 229 communicates with the separator 226 (in the manner described above) to receive liquid brine from the rotating layer, such kinetic energy driving the second stage turbine. Brine that has passed through that turbine is rejected at 300. A second stage turbine output shaft is indicated at 231.

A third stage rotary turbine is indicated at 329 and is communicating with the third stage rotary separator 326. Liquid separated by the separator 326 is employed to drive turbine 329, in the same manner as in the described first and second stages. In this case, the liquid passing through the separator and turbine is typically fresh water, so that such water that is rejected by the turbine at 120*a* may be combined with fresh water stream 120. A turbine output shaft is indicated at 331.

All the turbine stages 129, 229 and 329 may be located on a common shaft, or their shafts 131, 231 and 331 may be interconnected. Further, all separator and turbine stages in Fig. 2 may be coaxial.

Fig. 2 also shows a parallel system 400 of nozzle-separator-turbine stages 1129, 1229 and 1329 corresponding to stages 124, 126, 129, and 224, 226 and 229 and 324, 326 and 329, with connections to condensers 114 and 113 as shown. System 400 is otherwise the same as already described with reference to Fig. 2 and corresponding parts are otherwise indicated by corresponding reference numerals advanced by 1000.

In a typical installation employing an internal combustion engine producing hot products of combustion at 365°C, sea water as the working liquid can be heated to 318°C, and delivered to the first nozzle as saturated liquid water at $106 \times 10^5$ Pa absolute. The intermediate stage temperature is a variable; and using the conservative assumptions incorporated in Fig. 3, this temperature can be chosen at 171°C, giving a second stage pressure of $8.1 \times 10^5$ Pa absolute. The cycle just illustrated has a cycle efficiency of 23% i.e. 0.23 on the cycle performance axis of the diagram of Fig. 3.

The overall cycle efficiency, defined as net turbine power output divided by net power output plus heat rejected,

$$h_c = \frac{P_n}{P_n + Q_c},$$

has been estimated for the waste heat conditions outlined above. This is plotted in solid line in Fig. 3 as a function of the intermediate stage temperature, and for various degrees of conservation in the assumptions. The quality of entering fluid (percent steam), X, varies from 0 to 20. Turbine nozzle efficiency, $h_n$, is taken as 80% to 90%, with turbine efficiency, $h_t$, at 75% to 80%. The estimates, which represent currently demonstrated parameters, show cycle efficiency levels up to 23 percent. This cycle efficiency competes with well-developed organic Rankine cycles (which do not deliver byproduct water).

The described cycle transfers heat to the sea water at normal concentration. A special feature of the cycle is that the more concentrated brine contacts the nozzles and separators in a transistory manner which precludes corrosion. This has been demonstrated with highly corrosive geothermal brines. The cycle can be operated so that no water is evaporated from solid surfaces, the eliminate scaling buildup and corrosion problems, at a slight sacrifice of cycle efficiency, i.e. the chain dotted curve in Fig. 3. The cycle is also readily scalable from very small sizes to very large sizes of equipment.

In summary, the described marine cycle will conserve the "waste heat" of ship's engine exhaust gas, producing shaft power to run electrical auxiliaries and also fresh water. The shaft power produced is equivalent to that from the more complicated and expensive organic Rankine cycle boilers which do not deliver fresh water.

Advantages also include:

1. Low first cost; low operating cost.
2. Simplicity and reliability. Very few close tolerances required.
3. No additional fluids required; no problems with toxic materials.
4. Scalable in size.
5. Efficient countercurrent heat exchange (smaller exchangers) because of reduced vaporization duty.
6. Low turbine RPM (eliminates gearboxes).
7. No concentrated brine handled in heat exchangers (relative to other water makers).

## Claims

1. A system for producing fresh water from brine, employing waste hot fluid, including first heat transfer means (21 or 121) for receiving the hot fluid and the brine for transfer of heat from the hot fluid to the brine, separator means 26 or 126, 226, 326) for receiving heated brine fed to the separator means for producing rotating liquid layer (176) and for separating steam therefrom, and further heat transfer means (13, 14 or 113) for receiving the brine and also steam separated in said separator means for transferring heat from the steam to the brine thereby to condense the steam, and means for collecting the fresh water condensate characterised in that said further heat transfer means (13, 14 or 113) is connected to receive the brine prior to the heating thereof in said first heat transfer means (21 or 121), in that said separator means is a rotary separator means and in that the rotary separator means includes nozzle means (24 or 124, 224, 324) connected to receive heated brine from said first heat transfer means (21 or 121) for flow through the nozzle means for expansion of the brine to form a fluid jet or jets of steam and liquid droplets to constitute said rotating liquid layer.

2. A system as claimed in claim 1, additionally for producing power, and including turbine means (29 or 129, 229, 329, or 129, 229, 329, 1129, 1229, 1329) communicating with said separator means to receive liquid from said rotating liquid layer to drive the turbine means.

3. A system as claimed in claim 2, including a first stage nozzle means (124) associated with a first stage separator (126) which is in turn associated with a first stage turbine (129), there being a second stage nozzle means (224) communicating with said first stage turbine (129) to receive brine under pressure exhausting therefrom for flow through the second stage nozzle means (224) for expansion of the brine to form a fluid jet or jets of steam and liquid droplets for separation in a second stage rotary separator (226), and a second stage turbine (229) is provided communicating with said second stage separator to receive liquid from the rotating liquid layer (176) produced therein.

4. A system as claimed in claim 3, including a third stage rotary separator (326) and a third stage nozzle means (324) and a third stage turbine (329) associated therewith, the third stage nozzle means communicating with the first stage rotary separator *via* a still further heat exchanger means (114) to receive a mixture of steam separated in said first stage rotary separator and liquid droplets condensed from that steam in said still further heat exchanger means, for expansion therethrough and for separation in the third stage rotary separator, the third stage turbine communicating with the third stage rotary separator to be powered by liquid separated in a rotating liquid layer therein.

5. A system as claimed in claim 3 or 4, in which said turbines are interconnected to provide a common power output.

6. A system as claimed in claim 1 including first and second nozzles or sets of nozzles (124 and 1124) connected in parallel to receive heated brine from said heat transfer means and the rotary separator means includes first and second rotary separators (126 and 1126) for separating the steam and liquid droplets of the fluid jets formed respectively by the first and second nozzles or sets of nozzles.

7. A system as claimed in claim 6, additionally for the production of power, and including first and second turbines (129, 1129) communicating respectively with said first and second rotary separators to receive liquid separated in rotating liquid layers in same for driving the first and second turbines.

8. A method for producing fresh water from aqueous brine, employing waste hot fluid, including the steps of transferring heat from the hot fluid to the brine, producing a rotating liquid layer from the heated brine and separating steam therefrom, condensing said steam by passing the steam in heat transfer relationship with the brine and collecting the fresh water condensate characterised by condensing the steam by passing the steam in heat transfer relationship with the brine prior to heating the brine with said hot fluid, by expanding the heated brine to form a fluid jet or jets of steam and liquid droplets and by causing the jet or jets to rotate a rotary separator thereby to form said rotating liquid layer.

9. A method as claimed in claim 8, additionally for producing power, and including the step of passing the liquid from the rotating liquid layer to a turbine means to drive same.

**Revendications**

1. Une installation de production d'eau douce à partir d'eau salée, employant un fluide chaud perdu, comprenant des premiers moyens de transfert de chaleur (21 ou 121) destinés à recevoir le fluide chaud et l'eau salée, pour transférer la chaleur du fluide chaud vers l'eau salée, des moyens séparateurs (26 ou 126, 226, 326) destinés à recevoir l'eau salée chauffée qui est introduite dans les moyens séparateurs, pour produire une couche de liquide en rotation (176) et pour séparer de la vapeur à partir de celle-ci, et des moyens de transfert de chaleur supplémentaires (13, 14 ou 113) destinés à recevoir l'eau salée ainsi que la vapeur séparée dans les moyens séparateurs, pour transférer de la chaleur de la vapeur vers l'eau salée, afin de condenser la vapeur, et des moyens destinés à recueillir l'eau douce condensée, caractérisée en ce que les moyens de transfert de chaleur supplémentaires (13, 14 ou 113) sont branchés de façon à recevoir l'eau salée avant le chauffage de celle-ci dans les premiers moyens de transfert de chaleur (21 ou 121), en ce que les moyens séparateurs consistent en moyens séparateurs tournants, et en ce que les moyens séparateurs tournants comprennent des moyens à buse (24 ou 124, 224, 324) qui sont branchés de façon à recevoir l'eau salée chauffée provenant des premiers moyens de transfert de chaleur (21 ou 121), pour la faire circuler dans les moyens à buse afin que l'eau salée soit soumise à une expansion pour former un ou plusieurs jets de fluide consistant en vapeur et en gouttelettes de liquide, pour constituer la couche de liquide en rotation.

2. Une installation selon la revendication 1, destinée à produire en outre de l'énergie, et comprenant des moyens à turbine (29 ou 129, 229, 329, ou 129, 229, 329, 1129, 1229, 1329) qui communiquent avec les moyens séparateurs de façon à recevoir le liquide provenant de la couche de liquide en rotation pour l'entraînement des moyens à turbine.

3. Une installation selon la revendication 2, comprenant des moyens à buse de premier étage (124) associés à un séparateur de premier étage (126) qui est à son tour associé à une turbine de premier étage (129), dans laquelle il existe des moyens à buse de second étage (224) communiquant avec la turbine de premier étage (129) pour recevoir de l'eau salée sous pression s'échappant de celli-ci, de façon à circuler dans les moyens à buse de second étage (224), pour donner lieu à une expansion de l'eau salée, de façon à former un ou plusieurs jets de fluide consistant en vapeur et en gouttelettes de liquide, pour la séparation dans un séparateur tournant de second étage (226), et dans laquelle ill existe une turbine de second étage (229) qui communique avec le séparateur de second étage de façon à recevoir du liquide provenant de la couche de liquide en rotation (176) qui est produite dans celui-ci.

4. Une installation selon la revendication 3, comprenant un séparateur tournant de troisième étage (326) et des moyens à buse de troisième étage (324) et une turbine de troisième étage (329) associée à ceux-ci, les moyens à buse de troisième étage communiquant avec le séparateur tournant de premier étage par l'intermédiaire d'autres moyens échangeurs de chaleur supplémentaires, pour de façon à recevoir un mélange de vapeur séparée dans le séparateur tournant de premier étage et de gouttelettes de liquide condensées à partir de cette vapeur dans les autres moyens échangeurs de chaleur suplémentaires, pour que ce mélange subisse une expansion en traversant les moyens à buse de troisième étage et une séparation dans le séparateur tournant de troisième étage, la turbine de troisième étage communiquant avec le séparateur tournant de troisième étage pour être mue par le liquide séparé dans une couche de liquide en rotation dans celui-ci.

5. Une installation selon la revendication 3 ou 4, dans laquelle les turbines sont accouplées pour constituer une source d'énergie commune.

6. Une installation selon la revendication 1, comprenant des première et seconde buses ou des premier et second ensembles de buses (124 et 1124) branchés en parallèle de façon à recevoir de l'eau salée chauffée provenant des moyens de transfert de chaleur, tandis que les moyens séparateurs tournants comportent des premier et second séparateurs tournants (126 et 1126) destinés à séparer la vapeur et les gouttelettes de liquide des jets de fluide qui sont formés respectivement par les première et seconde buses ou les premier et second ensembles de buses.

7. Une installation selon la revendication 6, destinée à produire en outre de l'énergie, et comprenant des première et seconde turbines (129, 1129) qui communiquent respectivement avec les premier et second séparateurs tournants, pour recevoir le liquide séparé dans les couches de liquide en rotation dans ces derniers, afin d'entraîner les première et seconde turbines.

8. Um procédé pour produire de l'eau douce à partir d'eau salée en employant un fluide chaud perdu, comprenant les opérations qui consistent à transférer de la chaleur du fluide chaud vers l'eau salée, à produire une couche de liquide en rotation à partir de l'eau salée chauffée, et à séparer de la vapeur à partir de celle-ci, à condenser la vapeur en la faisant passer en relation de transfer thermique avec l'eau salée, et à recueillir l'eau douc condensée, caractérisé en ce qu'on condense la vapeur en la faisant passer en relation de transfert thermique avec l'eau salée avant de chauffer l'eau salée avec le fluide chaud, en soumettant l'eau salée chauffée à une expansion pour former un ou plusieurs jets de fluide consistant en vapeur et en gouttelettes de liquide, et en faisant en sorte que le ou les jets fassent tourner un séparateur tournant, pour former ainsi la couche de liquide en rotation.

9. Un procédé selon la revendication 8, destiné à produire en outre de l'énergie, et comprenant l'opération qui consiste à diriger vers des moyens à turbine le liquide provenant de la couche de liquide en rotation, pour entraîner ces moyens à turbine.

**Patentansprüche**

1. System zum Herstellen von Frischwasser aus Salzwasser unter Verwendung eines Abwârmemediums, bestehend aus ersten Wärmeübertragungsmitteln (21 oder 121) zur Aufnahme des warmen Mediums und des Salzwassers zur Übertragung von Wärme von dem warmen Medium an das Salzwasser, Abscheidemitteln (26 oder 126, 226, 326) zur Aufnahme des den Abscheidemitteln zugeführten erwärmten Salzwassers zum Erzeugen einer rotierenden Flüssigkeitsschicht (176) und zum Abscheiden von Dampf von dieser, weiteren Wärmeübertragungsmitteln (13,14 oder 113) zur Aufnahme des Salzwassers und ferner des in den Abscheidemitteln abgetrennten Dampfes zur Übertragung von Wärme vom Dampf an das Salzwasser, um dadurch den Dampf zu kondensieren und aus Mitteln zum Sammeln des Frischwasserkondensats, dadurch gekennzeichnet, daß das weitere Wärmeübertragungsmittel (13,14 oder 113) so angeschlossen ist, daß das Salzwasser vor seiner Erwärmung in dem ersten Wärmeübertragungsmittel (21 oder 121) aufgenommen wird, daß das Abscheidemittel ein Rotationsabscheider ist und daß der Rotationsabscheider eine derart angeschlossen Düseneinrichtung (24 oder 124, 224, 324) umfaßt, daß erwärmtes Salzwasser von dem ersten Wärmeübertragungsmittel (21 oder 121) aufgenommen wird, damit eine Strömung durch die Düseneinrichtung zur Expansion des Salzwassers stattfindet, um einen Flüssigkeitsstrahl oder Strahlen von Dampf und Flüssigkeitströpfchen zur Ausbildung der rotierenden Flüssigkeitsschicht zu bilden.

2. System nach Anspruch 1, das zusätzlich Kraft erzeugt, dadurch gekennzeichnet, daß Turbineneinrichtungen (29 oder 129, 229, 329 oder 129, 229, 329, 1199, 1229, 1329) mit den Abscheidemitteln zur Aufnahme von Flüssigkeit aus der rotierenden Flüssigkeitsschicht zum Antrieb der Turbineneinrichtung in Verbindung stehen.

3. System nach Anspruch 2, dadurch gekennzeichnet, daß eine Vorstufendüseneinrichtung (124) einem Vorstufenabscheider (126) zugeordnet ist, der seinerseits einer Vorstufenturbine (129) zugeordnet ist, daß eine zweite Düsenstufe (224) mit der Vorstufenturbine (129) zur Aufnahme von aus dieser unter Druck austretendem Salzwasser zum Durchströmen der zweiten Düsenstufe (224) für eine Expansion des Salzwassers zum Bilden eines Flüssigkeitsstrahls oder von Strahlen aus Dampf und Flüssigkeitströpfchen zur Abscheidung in einer zweiten Rotationsabscheiderstufe (226) in Verbindung steht und daß eine zweite Turbinenstufe (229) vorgesehen ist, die mit der zweiten Abscheiderstufe zur Aufnahme von Flüssigkeit aus der in dieser erzeugten rotierenden Flüssigkeitsschicht (176) in Verbindung steht.

4. System nach Anspruch 3, dadurch gekennzeichnet, daß eine dritte Rotationsabscheiderstufe (326) und eine dritte Düsenstufe (324) sowie eine damit verbundene dritte Turbinenstufe (329) vorgesehen sind, daß die dritte Düsenstufe mit dem Forstufenrotationsabscheider über ein weiteres Wärmetauschermittel (114) derart in Verbindung steht, daß ein Gemisch von im Vorstufenrotationsabscheider abgeschiedenem Dampf und aus dem Dampf in dem weiteren Wärmetauschermittel kondensierten Flüssigkeitströpfchen für eine beim Durchgang erfolgende Expansion und zur Abscheidung in der dritten Rotationsabscheiderstufe aufgenommen wird, und daß die dritte Turbinenstufe mit der dritten Rotationsabscheiderstufe für einen Antrieb durch in einer in dieser enthaltenen rotierenden Flüssigkeitsschicht abgeschiedene Flüssigkeit in Verbindung steht.

5. System nach Anspruch 3 oder 4, dadurch gekennzeichnet, daß die Turbinen zur Erzeugung einer gemeinsamen Kraftabgabe untereinander verbunden sind.

6. System nach Anspruch 1, dadurch gekennzeichnet, daß erste und zweite Düsen oder Düsensätze (124) zur Aufnahme erwärmten Salzwassers aus dem Wärmeübertragungsmittel parallelverbunden sind und das Rotationsabscheidemittel einen ersten und einen zweiten Rotationsabscheider (126 und 1126) zum Abscheiden von Dampf und Flüssigkeitströpfchen aus den Mediumstrahlen umfaßt, die jeweils von der ersten und der zweiten Düse oder Düsensätzen gebildet sind.

7. System nach Anspruch 6 zur zusätzlichen Krafterzeugung, dadurch gekennzeichnet, daß eine erste und eine zweite Turbine (129, 1129) vorgesehen sind, die jeweils mit dem ersten bzw. dem zweiten Rotationsabscheider zur Aufnahme von Flüssigkeit verbunden sind, die in rotierenden Flüssigkeitsschiechten in diesen zum Antrieb der ersten und der zweiten Turbine abgeschieden wird.

8. Verfahren zum Herstellen von Frischwasser aus einer wässrigen Sole unter Verwendung eines Abwärmemediums mit den Schritten, daß Wärme von dem warmen Medium an das Salzwasser übertragen, eine rotierende Flüssigkeitsschicht aus dem erwärmten Salzwasser gebildet und von dieser Dampf abgetrennt und der Dampf dadurch kondensiert wird, daß der Dampf in wärmeübertragender Verbindung mit dem Salzwasser geführt wird, wobei das Frischwasserkondensat gesammelt wird, gekennzeichnet durch eine Kondensierung des Dampfes in der Weise, daß der Dampf in wämeübertragender Verbindung mit dem Salzwasser vor dem Erwärmen des Salzwassers mit dem warmen Medium geführt wird, durch ein Expandieren des erwärmten Salzwasser in der Weise, daß ein Mediumstrahl oder Strahlen von Dampf und Flüssigkeitströpfchen gebildet werden, und durch ein Rotieren des Rotationsabscheiders durch den Strahl oder die Strahlen in der Weise, daß dadurch die rotierende Flüssigkeitsschicht gebildet word.

9. Verfahren nach Anspruch 8, bei dem zusätzlich Kraft erzeugt wird, dadurch gekennzeichnet, daB die Flüsigkeit aus der rotierenden Flüsigkeitsschicht zu einer Turbineneinrichtung zu deren Antrieb geleitet wird.

FIG. 1.

PRIMARY HEAT EXCHANGER

COMB. SOURCE

22

21

23

COMBUSTION PRODUCTS

CONDENSER WATER RETURN

14

12

13

12

SEA WATER IN

10

11

HEATED SEA WATER

16

19

15

17

CONDENSERS

18

WATER DROPS AND STEAM

24

STEAM

28

27

12a

NOZZLE

25

SEPARATOR — 26

20

LIQUID TURBINE ~29~

30

SHAFT POWER OUT

31

FRESH WATER OUT

CONCENTRATED BRINE OUT

32

BIPHASE SEPARATOR TURBINE

FIG. 3.

BIPHASE MARINE CYCLE EFFICIENCIES

1ST STAGE
2ND STAGE
$T_1$ °F $X_1$ $h_n$ $h_t$
$X_2$ $h_n$ $h_t$
600° .20 .90 .80 .20 .80 .80
600° 0.0 .85 .75 .05 .80 .75
0.3
0.2
0.1
0
CYCLE PERFORMANCE
250
300
350
400
SECOND STAGE TEMPERATURE °F

SEA WATER
IN
110
111
CONDENSER
113
115
218
112
120
FRESH WATER
OUT
120a
STEAM
SHAFT POWER
OUT
331
324
329
326
119a
CONCENTRATED BRINE
OUT
1120a
COMBUSTION PRODUCTS
CONDENSER
114
117
116
STEAM
119
128
131
219
228
231
226
224
229
300
1120
1119a
1329
113
1231
1229
114
1200
1131
1129
1119
1200
400
BRINE
200
121
123
124
126
129
HEATED
SEA WATER
112a
COMB.
SOURCE
122
Fig. 2.

FIG. 4.
168
196
174
167
167
173
177
180
167
178
179
FIG. 7.
198
186
199
169
200
187
168
199

FIG. 6.
183
182
7
186
7
192
174
169
184
198
201
185
180
187

5
175
172
171
180
Fig. 8.
170
167
178
5
168
182
185
6
174
186
183
173
184
171
176
169
167
Fig. 5.
187
177
6
180
188
191
197
191
178
168a
179
187a
190
189
181
193
193
194
176
196
195